(19) Europäisches Patentamt
European Patent Office
Office européen des brevets

(11) **EP 3 810 883 B1**

(12) **EUROPEAN PATENT SPECIFICATION**

(45) Date of publication and mention
of the grant of the patent:
**16.08.2023 Bulletin 2023/33**

(21) Application number: **18756307.7**

(22) Date of filing: **25.06.2018**

(51) International Patent Classification (IPC):
**E06B 7/12** *(2006.01)* **E04D 13/03** *(2006.01)*
**F24H 3/04** *(2022.01)* **F24H 3/10** *(2022.01)*
**H05B 3/84** *(2006.01)*

(52) Cooperative Patent Classification (CPC):
**E06B 7/12; E04D 13/03; E04D 13/0325;**
**F24H 3/0411; F24H 3/102; H05B 3/84;**
F24D 2220/2027; F24D 2220/2036; Y02B 30/00

(86) International application number:
**PCT/PL2018/000064**

(87) International publication number:
**WO 2020/005081 (02.01.2020 Gazette 2020/01)**

(54) **A DEVICE FOR PREVENTING WATER VAPOR CONDENSATION ON THE INDOOR SURFACE OF COMPOSITE ROOF WINDOWS**

VORRICHTUNG ZUR VERHINDERUNG DER KONDENSATION VON WASSERDAMPF AUF DER INNENFLÄCHE VON VERBUNDDACHFENSTERN

DISPOSITIF POUR EMPÊCHER LA CONDENSATION DE VAPEUR D'EAU SUR LA SURFACE INTÉRIEURE DE FENÊTRES DE TOIT COMPOSITES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.04.2021 Bulletin 2021/17**

(73) Proprietor: **LENBROCK Spólka z ograniczona odpowiedzialnoscia**
**43-100 Tychy (PL)**

(72) Inventors:
• **PRZYBYLA, Wojciech**
**43-200 Pszczyna (PL)**
• **PRZYBYLA, Marek**
**43-211 Piasek (PL)**

(74) Representative: **Klassek, Maciej Adam**
**INVENTCONSULT**
**Patent & Trademark Agency**
**Sowinskiego 1**
**40-272 Katowice (PL)**

(56) References cited:
**JP-A- 2001 248 598 KR-Y1- 200 440 348**
**US-A- 2 868 943 US-A1- 2011 192 831**
**US-A1- 2014 045 419**

EP 3 810 883 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a device for preventing water vapor condensation on the indoor surface of composite roof windows. The purpose of the device according to the invention is to prevent the formation and accumulation of condensation on roof windows, particularly on the surface of window panes or window frame, and in particular in the lower part thereof.

Surface condensation of water vapor is a phenomenon involving condensation of vapor on the surface of a barrier, and in a particular case - window surface from the warmer side.

Water vapor condensation on the indoor surface of a window may form if the temperature of window surface is lower than the dew point temperature of air close to the window. The formation of surface condensation depends mainly on indoor conditions such as temperature inside a room, air humidity i.e. partial pressure vapor, and air movement in a room, as well as the window structure, its insulation properties and the way it is built in, and also on outdoor conditions such as outdoor temperature and air movement outdoors (wind).

Water vapor condensation on indoor surfaces of roof windows mounted in a sloping roof results in the dripping of condensate down the walls of the room under the window. This makes the window or its elements moist, rooms may get flooded and in consequence floor in the window area and the furnishings placed thereon may get damaged. This phenomenon conduces the formation of mould, loss of wall thermal insulation properties and in consequence intensifies the phenomenon of moistness, and in winter leads to wall frost penetration and damage, and in particular the surface thereof.

This phenomenon makes it impossible to put furniture directly under a window to benefit from sunlight or to observe the night sky.

The possibility of the formation of condensation on the indoor surface of roof windows is checked by comparing the dew point temperature which depends on water vapor amount in the air of the room with temperature of window surface from the indoor side. Dew point temperature may be calculated based on a commonly known approximate formula:

$$t_d = \sqrt[8]{\frac{H}{100}} \times [112 + (0,9 \times t)] + (0,1 \times t) - 112$$

where:

$t_d$ - dew point temperature [$^0$C]
$t$ - indoor temperature [$^0$C]
H - relative air humidity inside a room, [%].

Conditions of water vapor condensation are checked by comparing the dew point temperature which depends on water vapor content in the air of the room with the temperature of indoor window surface. The possibility of the formation of condensation may be calculated based on a known formula:

$$v_i = t - \frac{t - t_s}{\alpha_i} k$$

where:

$v_i$ - temperature of window indoor surface
$t$ - temperature of air inside a room
$t_6$ - outdoor temperature
$\alpha_i$ - heat penetration coefficient
(the reverse of heat transfer resistance)
$k$ - window heat transfer coefficient.

If the temperature of a window indoor surface $v_i$ is lower than the dew point temperature, condensation will occur. Thus it is necessary to select or replace a window or equip it with additional accessories which will lower the heat transfer coefficient will thus increase the thermal insulation through adequate additional insulation of the barrier. It is also possible to change humidity conditions in the room e.g. ventilation improvement.

Condensation may occur in some parts of a room if they are in a specific place. It usually happens in the bottom part of a window recess where the temperature is lower as a result of air being cooled through the window surface.

In the case of water vapor in the air, the dew point temperature is the temperature in which water vapor in the air reaches the state of saturation due to cooling (with the existing air composition and pressure), and below that temperature it becomes oversaturated and condenses or resublimes. When the saturation state is reached, mist, clouds or precipitation forms in the air, and in closed rooms condensation occurs and water condenses on surfaces.

Apart from the inconvenient wetting of window areas close to roof windows, with water condensing on the indoor surface thereof, there forms a layer of cool air which has been cooled as a result of a contact with frame and glass pane of a roof window mounted on a sloping roof. The layer of forming cool air causes physical discomfort to individuals being in the window zone of the room.

There are various ways to prevent or reduce condensation on the indoor surface of roof windows.

The easiest known way to prevent condensation on the indoor window surface is to increase the dew point temperature and adjust temperature inside the room and humidity of air in the room which contains water vapor by using all kinds of different radiators, often equipped with a fan, most often controlled by means of simple temperature regulators placed directly under a window, most often close to the floor in the case of roof windows. Heaters used were intended mainly for heating the inside of the entire room and were not adjusted to heating windows.

American patent application US5899078 A disclosed a system for reducing power consumption of door and frame heaters of refrigerating devices while maintaining protection against condensation. The system includes one or more condensation sensors attached to the door which are monitored by control circuitry which controls power applied to the door or frame heater. Condensation on the sensor will increase the conductivity of the sensor, which is detected by the control circuitry. When condensation occurs, power is applied to the heater until the condensation is eliminated. The invention includes two different condensation sensor configurations.

International patent application WO2005030013 (A1) discloses a system in connection with a cold-storage/freezer space, said cold-storage freezer space comprising at least one door with at least two transparent sheets, a conductive layer being placed on the sheets to function as a heating element to keep said sheets free of condensation, comprises a moisture sensor and a temperature sensor on the side which is warm when using the cold-storage/freezer space. Said sensors are connected to a control unit, said control unit regulating the supply of power to said conductive layer. The system also comprises a second temperature sensor in said cold-storage/freezer space, i.e. on the side which is cold when using the cold-storage/freezer space, said second temperature sensor being connected to said control unit.

Canadian patent application CA2942907 (A1) discloses condensation mitigation devices and condensation prediction/detection techniques configured to prevent window condensation with reduced power consumption. A condensation mitigation device is configured to predict and/or detect a window condensation event. The condensation mitigation device is powered on only during such an event, and the condensation mitigation device is powered off afterwards to conserve power.

Also international patent application WO2017162917 (A1) discloses a measurement and control method by means of which condensation generating on a surface is prevented by controlling the heating of the surface by means of control devices, the prevailing dew point temperature is calculated by measuring air humidity and temperature. Temperature of the condensing surface is measured and controlled so that the calculated dew point temperature is used as the set value of the surface temperature. To prevent condensation, safety temperature difference is added to dew point temperature difference and their sum is used as the set value for controlling the temperature of the condensing surface.

American patent applications US 2014/045419 A1 and US 2011/192831 disclose devices for preventing condensation on the indoor surface of windows.

Below are definitions of terms used in the description of the device according to the invention:

controller - electronic control system built-in the device and including all set values, data, variables entered in the memory of the device's controller;

regulator - a program function operating as a regulator implemented in the controller;

outdoor temperature sensor - a sensor for measuring air temperature outside a building;

indoor temperature sensor - a sensor for measuring air temperature inside a room with roof windows;

humidity sensor - a sensor for measuring relative air humidity inside a room with roof windows;

frame temperature sensor - a sensor for measuring temperature of the surface of the window frame of a roof window, mounted in its bottom part in the right or the left corner;

dew point module - part of the control logic which keeps the temperature of the surface above the dew point;

convection module - part of the control logic which maintains upward air convection with electricity consumption at the lowest possible level.

The essence of the design of the device according to the invention for the prevention of the condensation of water vapor in rooms on the indoor surface of composite roof windows consists in that the device includes a controller, indoor temperature sensor and a frame temperature sensor and/or outdoor temperature sensor and optionally a heater temperature sensor, and a heater and possibly a fan and/or a radiator and/or an insulation plate, and has a housing whose size is adjusted to the width of a roof window and can be mounted to a wall of the room or roof window frame, preferably at a distance, and a humidity sensor and/or convection module.

The device has a heater with one-sided thermal insulation from the side of the room, preferably in form of a resistance wire wound on a carrying element.

In a preferred embodiment, the device according to the invention has a heater divided into sections varying in heating power, with extreme sections having power higher than the middle section. The heater of the device may be a plate heater whose structure is sectional and consists of separate heating sections of various heating power whose sides are connected to each other.

In another preferred embodiment, the device may be equipped with a plate heater which has a sectional structure and consists of separate heating sections of equal heating power, whose sides are connected to each other, controlled independently to obtain different heating power.

To improve heat transfer efficiency, the device may be preferably equipped with a radiator with ribs in form of vertical flat continuous or dotted fins. In another preferred case, ribs of both extreme sets of parallel radiator ribs are inclined outwards in opposite directions and are at an angle $\alpha$ falling within the range of 5-85$^0$ off the vertical.

To facilitate air flow, the plate heater, insulation plate and the radiator are at a slight distance from at least one wall of the housing.

Furthermore, to improve the heat transfer efficiency, the device according to the invention is equipped with at least one fan directing a stream of heated air at the window frame. The device may be preferably equipped with two ventilation units, each having at least one fan; built in symmetrically on both sides of the device, on the internal surface of the insulation plate.

To enhance the convection effect, the ventilation unit is preferably equipped with external deflectors placed over suction holes installed on the external surface of the housing. For technological and economic reasons, the external deflectors and the housing are made of one piece of material.

Preferably the housing has holes or catches to mount it to a wall or window frame.

To obtain high efficiency and flexibility of the device's service, the housing has at least one gap along its length from the top; equipped with a fixed or adjustable shutter. The shutter is adjusted manually or mechanically by way of a remote controlled electrical motor.

The device according to the invention has a control system comprising a dew point module and a convection module. Indoor air temperature sensor, window frame temperature sensor, outdoor temperature sensor and a humidity sensor in the control system are connected to the controller by wire or wirelessly.

The device is equipped with a control panel on the housing and may be equipped with a receiver of remote signals introducing settings that are sent from a remote control or an electronic telecommunication device. The length of the device according to the invention is adjusted to the width of a roof window.

In a preferred embodiment, the device according to the invention has a modular structure with the central module being the controller unit in a separate housing, and side modules being heating modules connected thereto, with the same or different service parameters and/or dimensions, making it possible to adjust power and length of the entire device to the width of a roof window.

Preferably the window frame temperature sensor is integrated in one housing with the humidity sensor.

In a particularly preferred embodiment, the device according to the invention has an control system additionally equipped with an outdoor temperature sensor.

To obtain additional effect and to combine several functions, the device may be integrated with light e.g. with LED light. The device may also have additional equipment comprising a weather station and/or a radio set.

The control system of the device according to the invention comprises as a standard a controller equipped with a sensor for measuring indoor humidity and an indoor temperature sensor, dew point temperature module using a known approximate formula for calculating the dew point $t_d$, being a part of the logic intended to keep the surface of a roof window frame at a temperature above the dew point temperature, and a turned on convection module being a part of the control logic intended to keep convection of indoor air at a pre-set level, as well as a regulator that may have a standard on-off characteristics (bistable) or proportional P or proportional - Integral PI or Proportional - Integral - Derivative PID. Parameters including the value of the window heat transfer co-efficient (given by window manufacturer), window surface value, window height, fan activation and a table with fan revolution values against the power value to be emitted by the heater, are entered into the memory of the control system of the device according to the invention, and optionally a co-efficient of the heater temperature to window frame temperature; parameters entered into the memory are used for setting the regulator's parameters.

Optionally, the control system may be equipped with an outdoor temperature sensor and a window frame temperature sensor.

The control system maintains the demanded temperature $\mathbf{t_{min}= t_d + \Delta T}$ in the roof window area, where $\Delta\mathbf{T}$ is

a temperature value reserve - safe added value (offset), preventing condensation, higher by $\Delta T \geq 1\ ^0C$ from the dew point temperature $t_d$ thanks to the regulator, it can also ensure constant upward convection of air in the roof window area. The purpose of ensuring upward air convection is to obtain comfortable conditions in the zone under a roof window and prevent the flow of cold air on items placed under a roof window e.g. a bed or an armchair.

In its basic version the device according to the invention may be equipped with a control system comprising a sensor for measuring humidity inside the room and an indoor air temperature sensor; dew point module and turned on convention module.

Dew point module in this system operates as a standard closed-loop control system with feedback.

The pre-set value in this system in the dew point temperature module is temperature $t_{min}$, being a total of the dew point temperature $t_d$ and the reserve value $\Delta t$.

The feedback value is the window frame temperature from the window frame temperature sensor.

Parameters entered into the memory of the device and comprising the value of the window heat transfer co-efficient (given by window manufacturer), window surface value and window height are used for defining PID parameters of the regulator, whereas data comprising fan activation and the table with fan revolution values against the value of power to be emitted by the heater are used for controlling the fan.

In the convection module of this control system the function for calculating convection based on the use of indoor air temperature, frame temperature and parameters comprising the value of window heat transfer co-efficient (given by window manufacturer), window surface value and window height controls the heater so as to keep constant upward air convection with the lowest possible consumption of electric energy.

The control system has a function comparing the power value from the dew point module with the value of power from the convection module and sends to the heater the value of power that is the higher of the two and which should be emitted by the heater.

This value is sent by means of PWM signal or an analog or a digital signal to at least one electric heater equipped with at least one fan controlled by a fan control function based on the value of power to be emitted by the heater, and parameters comprising fan activation and a table with fan revolution values against the power value to be emitted by the heater, entered into the memory of the device.

The device according to the invention may be optionally equipped with a control system comprising a sensor for measuring humidity inside the room and an indoor air temperature sensor; outdoor temperature sensor and a dew point module and a turned on convection module. The dew point module of this system works as an open-loop control system without feedback and based on a pre-set value of t min, outdoor temperature value and parameters comprising value of window heat transfer co-efficient (given by window manufacturer), window surface value and window height.

The pre-set value in this system is the demanded temperature $t_{min}$, being a total of the dew point temperature $t_d$ and the reserve value $\Delta t$.

The dew point module has a function for calculating the power of the heater necessary to keep the temperature of the window frame above the dew point based on the outdoor temperature value and parameters entered into the memory and comprising window heat transfer co-efficient, window surface value and window height.

In the convection module of this control system, the function for calculating convection based on indoor air temperature, outdoor air temperature and parameters entered into the memory of the device and comprising the value of window heat transfer co-efficient (given by window manufacturer), window surface value and window height controls the heater so as to maintain constant upward air convection with the lowest possible consumption of electric energy.

The control system has a function for comparing the value of power from the dew point module with the value of power from the convection module and sends to the heater the value of power that is the higher of the two and should be emitted by the heater.

This value is sent by means of PWM signal or an analog or a digital signal to at least one electric heater equipped with at least one fan controlled by the fan control function based on value of power to be emitted by the heater, and parameters comprising fan activation and a table with fan revolution values against the value of power to be emitted by the heater, entered into the memory of the device.

The device according to the invention may be optionally equipped with a control system comprising a sensor for measuring humidity inside a room, an indoor air temperature sensor; outdoor temperature sensor and a roof window frame temperature sensor and a dew point module and a turned on convection module.

The dew point module in this system operates as a standard closed-loop control system with feedback. The pre-set value in this system is the demanded temperature $t_{min}$, being a total of the dew point temperature $t_d$ and the reserve value $\Delta t$. The feedback value is the window frame temperature from the frame temperature sensor.

Outdoor air temperature and parameters comprising the value of the window heat transfer co-efficient (given by window manufacturer), window surface value and window height are used for setting PID parameters of the regulator, whereas data comprising fan activation and the table with fan revolution values in against the value of power to be emitted by the heater are used for controlling the fan.

In this system the function for calculating convection based on indoor air temperature, frame surface temperature, outdoor air temperature and parameters entered into the memory of the device and comprising the value of window heat transfer co-efficient (given by window manufacturer), window surface value and window height controls the heater so as to keep constant upward air convection with the lowest possible consumption of electric energy.

The control system has a function for comparing the value of power from the dew point module with the value of power from the convection module and sends to the heater the value of power that is the higher of the two and should be emitted by the heater.

This value is sent by means of PWM signal or an analog or a digital signal to at least one electric heater equipped with at least one fan controlled by a fan control function based on the value of power to be emitted by the heater, and parameters comprising fan activation and a table with fan revolution values against the value of power to be emitted by the heater, entered into the memory of the device.

The device according to the invention may be optionally equipped with a control system provided with a sensor for measuring humidity inside the room, an indoor air temperature sensor, heater temperature sensor and a dew point module and a turned on convection module.

Dew point module in this system operates as a standard closed-loop control system with feedback.

The pre-set value in this system is the demanded temperature $t_{min}$ , being a total of the dew point temperature $t_d$ and the reserve value $\Delta t.$

The feedback value is the frame temperature calculated by the function based on total power supplied to the heater and heater temperature and parameters entered into the memory and comprising the value of the window heat transfer co-efficient (given by manufacturer); window surface value and window height.

Co-efficient of the ratio of heater temperature to the frame temperature is established empirically and provided to the frame temperature calculation function in parameters entered into the memory and additionally comprising the value of the window heat transfer co-efficient (given by manufacturer), window surface value and window height and the co-efficient of the ratio of heater temperature to roof window frame temperature. Parameters entered into the memory of the control system are also used for defining PID parameters of the regulator.

The system works based on the principle that the lower the window frame temperature before the heater in a spot where the heater sensor is located, the lower the heater temperature with the same power supplied to the heater.

In the convection module of this system the convection calculation function uses the calculated value of the temperature of roof window frame surface, indoor temperature value and parameters entered into the memory and comprising the value of window heat transfer co-efficient (given by window manufacturer), window surface value and window height, and controls the heater in such a way as to maintain constant upward air convection with the lowest possible consumption of electric energy.

The control system has a function comparing the value of power from the dew point module with the value of power from the convection module and sends to the heater the value of power which is the higher of the two and should be emitted by the heater.

The value is sent by means of PWM signal or an analog signal or a digital signal to at least one electric heater connected to at least one fan controlled by a fan control function based on the value of power to be emitted by the heater, and parameters comprising fan activation and a table with fan revolution values against the value of power to be emitted by the heater, entered into the memory of the device.

The device according to the invention was presented in exemplary embodiments thereof on attached drawings where:

Fig. 1 shows the device from the side of the room wall in an exploded perspective view;

Fig. 2 shows the perspective view of a two-fan unit;

Fig. 3 shows a part of the device according to the invention in a perspective view, with exposed cross-section (vertical),

Fig. 4. shows a radiator with the heater connected thereto in a perspective view from the side of the heater;

Fig. 5 shows a) table with example distribution of power along the length of the heater, b) a front view of one-piece heater with visible zones varying in power, c) front view of a multi-part heater made of plate heating sections of equal power connected separably to one another;

Fig. 6 shows a) radiator with ribs in form of continuous fins from the front view, b) radiator with ribs in form of dotted fins from the front view, c) radiator with a central set of vertical ribs and extreme sets or ribs inclined by the angle $\alpha$ from the front view, d) radiator from the side view, e) radiator from the top view and f) radiator from the perspective view, from the front, from the wall side,

Fig. 7 shows the device according to the invention in a) top view, b) side view, c) schematic view of the device with directions of air stream flows indicated,

Fig. 8 shows schematically an exemplary location of the device under a roof window with air flow indicated,

Fig. 9 shows schematically an exemplary location of the device with a roof window and highlighted mounting point of the window frame temperature sensor,

Fig. 10 shows a schematic diagram of an embodiment of the control system,

Fig. 11 shows a schematic diagram of another embodiment of the control system
Fig. 12 shows a schematic diagram of another embodiment of the control system,
Fig. 13 shows a schematic diagram of another embodiment of the control system.

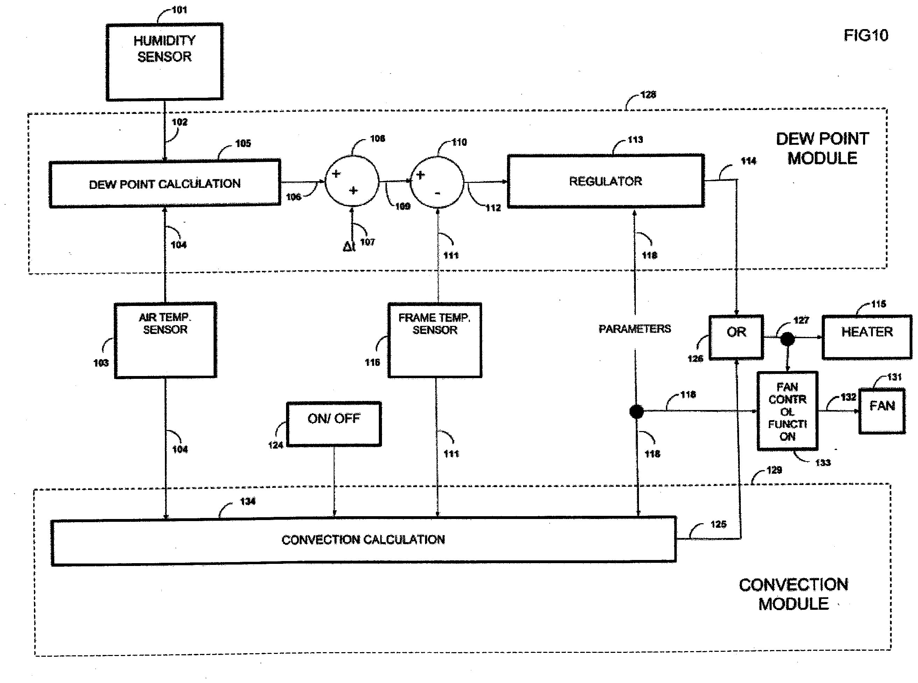

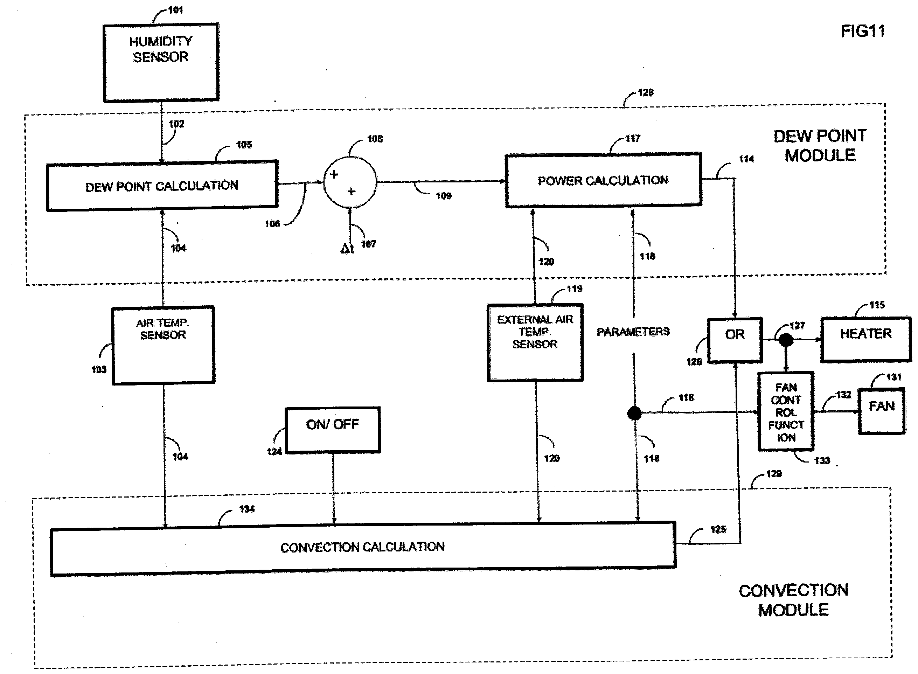

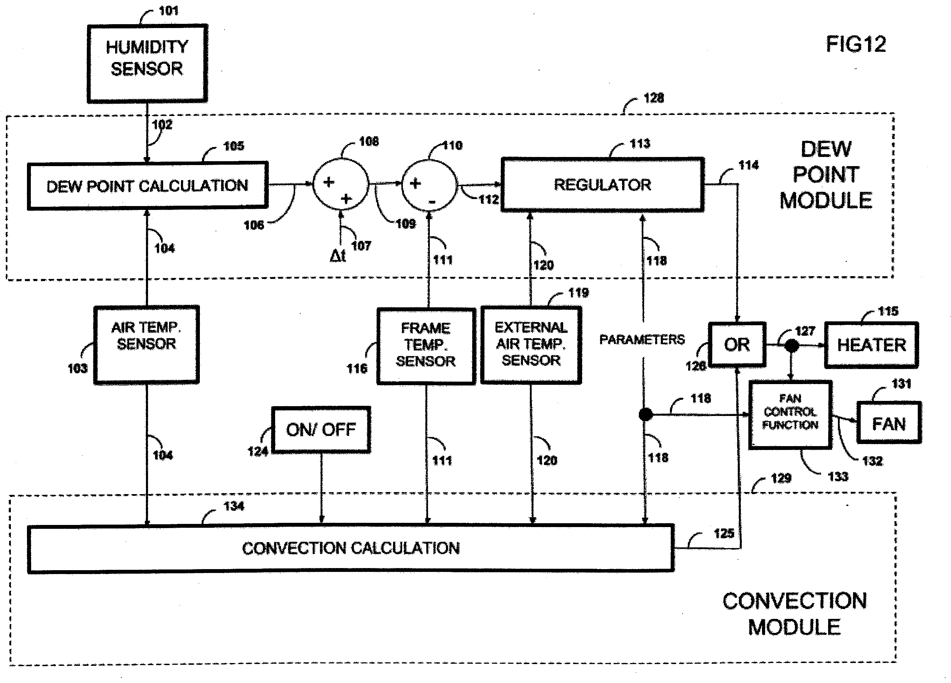

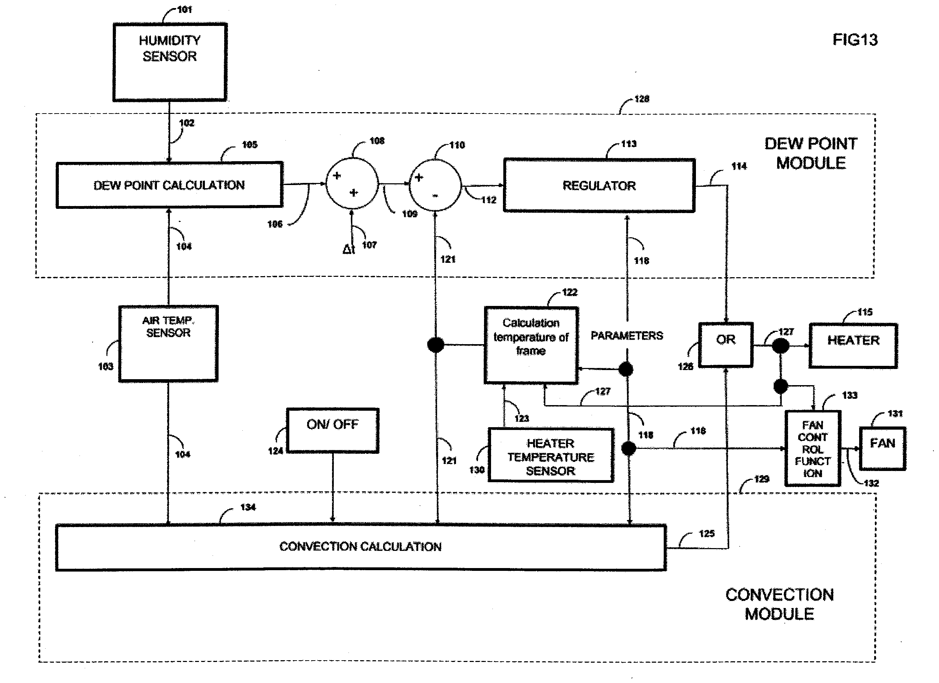

Below is the explanation of numbers on schematic diagrams of the control system in embodiments of the device according to the invention shown on Fig. 10, Fig. 11, Fig. 12 and Fig. 13 :

101. Sensor for measuring humidity of air inside the room
102. Air humidity level inside the room
103. Sensor for measuring temperature of air inside the room
104. Value of air temperature inside the room
105. Function for calculating approximate dew point temperature according to the formula:

$$t_{d} = \sqrt[8]{\frac{H}{100}} \times [112 + (0,9 \times t)] + (0,1 \times t) - 112$$

where:

$t_d$ - dew point temperature 6 [°C]
t - temperature of air inside the room 4 [°C]
H - relative humidity of air inside a room 2 [ %].

106. Dew point temperature
107. Value of temperature reserve $\Delta t$ ( $\geq 1$ °C )
108. The function of arithmetic addition of the dew point temperature $t_d$ to reserve temperature $\Delta t$ .
109. The value of demanded temperature $t_{min}$; being a result of the addition of the value of dew point temperature $t_d$ and the value of temperature reserve $\Delta t$.
110. The function of arithmetic subtraction; calculation of the difference between the value of demanded temperature $t_{min}$ and the value of frame temperature [measured (111) or calculated (121)],
111. Value of the window frame temperature (111) measured in its bottom part on the left or the right side,
112. Error value as the input value for the regulator;
113. regulator - a regulator function of the following standard characteristics:
bistable or Proportional P or Proportional - Integral PI or Proportional - Integral - Derivative PID.
114. Value of power to be emitted by the heater [from the dew point module (128)]; sent by means of PWM signal or an analog signal or a digital signal.
115. At least one electrical heater;
116. Roof window frame surface temperature sensor installed close to the right bottom or left bottom corner of the window
117. Function for calculating power to be emitted on the heater based on the demanded temperature $t_{min}$ (109), outdoor air temperature (120) and the co-efficient and parameters (118);
118. Parameters entered into the memory of the device:

-   window heat transfer co-efficient given by window manufacturer
-   window surface
-   window height
-   co-efficient of the ratio of heater temperature value to frame temperature;
-   fan activation and
-   table with fan revolution values against the value of power to be emitted by the heater;

119. Outdoor air temperature sensor
120. Outdoor air temperature
121. Calculated temperature of the window frame surface in the vicinity of the right bottom or left bottom corner of the window
122. Function calculating window frame temperature based on the measured temperature (123) of the heater (115) and value of power (127) supplied to the heater (115)
123. measured temperature of the heater (115)
124. Switch or value entered into the memory of the device which activates or deactivates the convection maintenance function.

125. Value of power to be emitted by the heater [from the convection module (129)]; sent by means of PWM signal or an analog signal or a digital signal.

126. Function comparing the value of power (114) from the dew point module (128) with the value of power (125) from the convection module (129) and supplying to the heater (115) the value of power that is higher.

127. Value of power to be emitted by the heater (115) sent by means of PWM signal or an analog signal or a digital signal.

128. Dew point module - part of the control logic which maintains the temperature of the surface above the dew point.

129. Convection module - part of the control logic which maintains upward air convection with electricity consumption at the lowest possible level

130. Temperature sensor of the heater (115); the device according to the invention may be equipped with more than one of those sensors, which makes it possible to measure temperature of various areas of the surface located before the device.

131. At least one fan

132. Value of rotational speed to be reached by the fan (131), sent by means of PWM signal or an analog signal or a digital signal.

133. Function controlling the fan (131) based on the value of power (127) to be emitted by the heater (115) and parameters (118) entered into the device.

134. Function which maintains upward air convection with electricity consumption at the lowest possible level

The device according to the invention has a box openwork housing **1,** equipped with mounting elements in form of lifting slings for mounting directly under the frame **2** of a roof window **3.** The housing **1** is equipped with an external control panel **4.** inside the housing **1** there is an insulation plate **5** made of a mat with heat transfer co-efficient of 0,021 W/mK, and plate heater **6** divided into sections varying in temperature, adjacent on one side to the radiator **7.** Extreme sections of the plate heater **6** have the working temperature higher than the temperature of the middle section. Plate heater **6** comprises a plate made of electro insulating heat-resistant laminate from glass fiber with resistance wire **8** laminated in and distributed unequally, symmetrically to the center of the heater **6,** more dense in the extreme sections of the heater **6.** Maximum working temperature on the housing **1** does not exceed $70^0$C.

On the other side there is a plate heater **6** stuck to the plate radiator **7** whose one side is flat and the other side has ribs and comprises a central set of parallel vertical ribs **9** and two side sets of side ribs parallel to each other **10,** inclined upwards outside at an angle of $\alpha = 65^0$off the vertical, which divide the heated air stream and direct part of the stream at the sides of the window **3** to simultaneously eliminate conditions facilitating water vapor condensation and to cause upward air convection in the area adjacent to the window **3.**
In another embodiment the ribs **2** of the radiator **7** are vertical flat continuous or dotted fins.

To ensure free flow of air inside the housing **1,** the heater **6,** insulation plate **5** and the radiator **7** are about 3mm away from the bottom of the housing **1.**

The device has two ventilation units mounted on the front of the insulation plate of which each has two fans **11,** built-in symmetrically on both sides, on the internal surface of the insulating plate **5.** The housing **1** has two pairs of suction holes **12** located symmetrically on the sides of the head wall of the housing and corresponding to the location of the fans **11,** shielded with deflectors **13.**

The housing **1** has several gaps **14** along its length from the top, equipped with an adjustable shutter **15.** The shutter **15** is adjusted by means of a remote controlled electrical engine.

In another embodiment the heater **6** has a sectional structure and consists of separate plate heating sections of equal heating power, whose sides are connected to each other, controlled independently to obtain different heating power.

Controller of the device, depending on the embodiment, is equipped with a sensor (101) for measuring air humidity inside the room, sensor (103) for measuring air temperature in the room, and depending on the embodiment, a sensor (116) for measuring temperature of the window frame **2** and a sensor (119) for measuring outdoor temperature (120), it is also equipped, depending on the embodiment and needs, with an on-off regulator (113) or proportional P regulator (113) or proportional - Integral PI regulator PI (113) or Proportional - Integral - Derivative PID regulator (113).

Depending on the embodiment of the device according to the invention, temperature sensors (119), (103) and (116) and the humidity sensor (101) are connected to the controller by wire or wireless connection.

The device according to the invention has in its embodiment a receiver of remote signals introducing settings which are sent from the remote control. In another embodiment the device according to the invention comprises a receiver of an electronic signal of a telecommunication device which may be, depending on the embodiment, a mobile phone signal or a signal of a computer connected to the Internet network.

To ensure efficient operation of the device according to the invention along the entire width of a roof window **3,** the width of the device is adjusted to the width of the window frame **2.**

In a specific embodiment, the device according to the invention has a modular structure with the central module being the controller in a separate housing, and side modules being independent heating modules or heating and ventilation modules with different service parameters and/or various dimensions connected thereto, making it possible to adjust the entire device to the width of a roof window **3**.

In another embodiment the device has a sensor (116) measuring temperature (111) of frame **2**, which is integrated in one housing with the humidity sensor (101).

The device according to the invention is equipped in its basic version with a control system provided with a sensor (101) for measuring humidity inside a room, sensor (103) for measuring temperature (104) of indoor air and sensor (116) for measuring temperature (111) of window **3** frame **2**, dew point module (128) and turned on convection module (129). Dew point temperature module (128) in this system operates as a standard closed-loop control system with feedback. The pre-set value (109) in this system in the dew point temperature module (128) is the value of the demanded temperature $t_{min}$, being a total of the dew point temperature $t_d$ (106) calculated by means of a known function (105), plus the added value of the reserve $\Delta t$ (107). The feedback value is the temperature (111) of the window frame from the sensor (116) for measuring temperature of the window **3** frame **2**. Parameters (118) entered into the memory of the device and comprising the value of the window heat transfer co-efficient (given by window manufacturer), window surface value and window height are used for setting PID parameters of the regulator (113), whereas data comprising fan activation and the table with fan revolution values against the value of power to be emitted by the heater are used for controlling the fan (131).

In the convection module (129) of this control system the function for calculating convection based on the indoor air temperature (104), temperature of the frame (111) and parameters (118) comprising the value of window heat transfer co-efficient (given by window manufacturer), window surface value and window height controls the heater (115) so as to keep constant upward air convection with the lowest possible consumption of electric energy.

The control system performs the function comparing the value of power from the dew point module (128) with the value of power from the convection module (129) and sends to the heater (115) the value of power (114)(125) that is the higher of the two and which should be emitted by the heater (115).

This value is sent by means of PWM signal or an analog or a digital signal to an electric heater (115) equipped with a fan (131) controlled by the fan control function based on the value of power (127) to be emitted by the heater (115) and parameters (118) entered into the memory of the device and comprising fan activation and a table with fan revolution values against the value of power (127) to be emitted by the heater (115).

In another embodiment, the device according to the invention is equipped with a control system provided with a sensor (101) for measuring humidity inside a room, sensor (103) for measuring temperature (104) of indoor air and sensor (119) for measuring outdoor temperature (120) and a dew point module (128) and a turned on convection module (129). Dew point module (128) of this embodiment operates as an open-loop control system without feedback based on the pre-set value, which is the demanded temperature t min (109), being a total of the dew point temperature t d (106) and the value of the reserve $\Delta t$ (107), and on the value of outside temperature (120) and parameters (118) entered into the memory of the device and comprising the value of window heat transfer co-efficient (given by window manufacturer), window surface value and window height. The dew point module (128) has a function (117) for calculating the power of the heater (115) necessary to keep the temperature of the window frame (2) above the dew point based on the value of outdoor temperature (120) and parameters (118) entered into the memory and comprising the value of window heat transfer co-efficient, window surface value and window height.

In the convection module (129) of this control system, the function for calculating convection based on outdoor air temperature (120), indoor air temperature (104) and parameters (118) entered into the memory and comprising: value of window heat transfer co-efficient (given by window manufacturer), window surface value and window height, controls the heater (115) so as to maintain constant upward air convection with the lowest possible consumption of electric energy.

The control system has a function comparing the value of power (114) from the dew point module (128) with the value of power (125) from the convection module (129) and sends to the heater the value of power (114)(125) that is the higher of the two and which should be emitted by the heater (115). This value is sent by means of PWM signal or an analog or a digital signal to an electric heater (115) equipped with a fan (131) controlled by a fan control function based on the value of power (127) to be emitted by the heater (115) and parameters (118) entered into the memory of the device and comprising fan activation and a table with fan revolution values against the value of power (127) to be emitted by the heater (115).

In another preferred embodiment, the device according to the invention is optionally equipped with a control system provided with a sensor (101) for measuring humidity inside a room, sensor (103) for measuring temperature (104) of indoor air, sensor (119) for measuring outdoor temperature (120) and a sensor (116) for measuring temperature (111) of a roof window **3** frame **2** , and dew point module (128) and turned on convection module (129).

Dew point module (128) in this system operates as a standard closed-loop control system with feedback. The pre-set value in this system is the demanded temperature $t_{min}$ (109), being a total of the dew point temperature $t_d$ (106) and the pre-set reserve value Δ**t** (107). The feedback value is the window frame temperature (111) from the frame temperature sensor.(116).

In the convection module (129) of this control system, the function for calculating convection based on the outdoor air temperature (120), indoor air temperature (104), frame temperature (111) and parameters (118) entered into the memory and comprising: value of window heat transfer co-efficient (given by window manufacturer), window surface value and window height, controls the heater (115) so as to maintain constant upward air convection with the lowest possible consumption of electric energy.

The control system has a function comparing the value of power (114) from the dew point module (128) with the value of power (125) from the convection module (129) and sends to the heater (115) the value of power that is the higher of the two (114)(125) and which should be emitted by the heater (115). This value is sent by means of PWM signal or an analog or a digital signal to an electric heater (115) equipped with a fan (131) controlled by a fan control function based on the value of power to be emitted by the heater (115) and parameters entered into the memory of the device and comprising fan activation and a table with fan revolution values against the value of power to be emitted by the heater (115).

In another preferred embodiment, the device according to the invention is optionally equipped with a control system provided with a sensor (101) for measuring humidity inside a room, sensor (103) for measuring temperature (104) of indoor air and sensor (130) for measuring temperature (123) of the heater and a dew point module (128) and turned on convection module (129).

The dew point module (128) in this system operates as a standard closed-loop control system with feedback. The pre-set value in this system is the demanded temperature $t_{min}$ (109), which is a total of the dew point temperature $t_d$ (106) and value of the reserve Δ**t** (107).

The feedback value is the temperature of the window frame (121) calculated by the function (122) based on total power (127) supplied to the heater (115) and heater temperature and parameters (118) entered into the memory and comprising value of the window heat transfer co-efficient (given by window manufacturer); window surface value and window height. The lower the temperature of the frame surface before the heater (115) at a point where the sensor (130) of the heater (115) is located, the lower the temperature (123) of the heater (115), with the same power (127) supplied to the heater (115). Co-efficient of the ratio of heater temperature to the frame temperature is established empirically and provided to the function (122) for calculating frame temperature in parameters (118) entered into the memory and additionally comprising the value of the window heat transfer co-efficient (given by manufacturer), window surface value and window height and the co-efficient of the ratio of heater temperature to roof window frame temperature. Parameters (118) entered into the memory are also used for establishing PID parameters of the regulator (113).

In the convection module (129) of this system, the function (134) for calculating convection uses the calculated value of temperature (121) of the surface of frame **2** of a roof window **3** value of indoor temperature (104) and parameters (118) entered into the memory and comprising the value of the window heat transfer co-efficient (given by manufacturer) , value of window surface and window height and the co-efficient of the relation of temperature (123) of the heater (115) to the temperature (111) of the frame **2** of a roof window **3,** and controls the heater (115) so as to keep constant upward air convection with the lowest possible consumption of electric energy. The control system has a function comparing the value of power (114) from the dew point module (128) with the value of power (125) from the convection module (129) and sends to the heater (115) the value of power that is the higher of the two (114)(125) and should be emitted by the heater (115).

This value is sent by means of PWM signal or an analog or a digital signal to an electric heater (115) equipped with a fan (131) controlled by a fan control function based on the value of power to be emitted by the heater (115) and parameters entered into the memory of the device and comprising fan activation and a table with fan revolution values against the value of power to be emitted by the heater (115).

In all control systems of the embodiments of the device according to the invention, heaters are controlled by means of PWM signal or an analog signal or a digital signal.

The device according to the invention is characterized by stable operation and high efficiency and effectiveness in preventing condensation of water vapor on roof windows **3** in a wide range of temperatures and highly changeable weather conditions. The device according to the invention simultaneously ensures that stable exchange of convection air and convenient temperature are maintained in areas surrounding roof windows **3,** facilitating the use of space under roof windows **3.** The device may also be used in the case of building facilities with sloping roofs with roof windows **3,** as well as big and small oblique glazed surfaces.

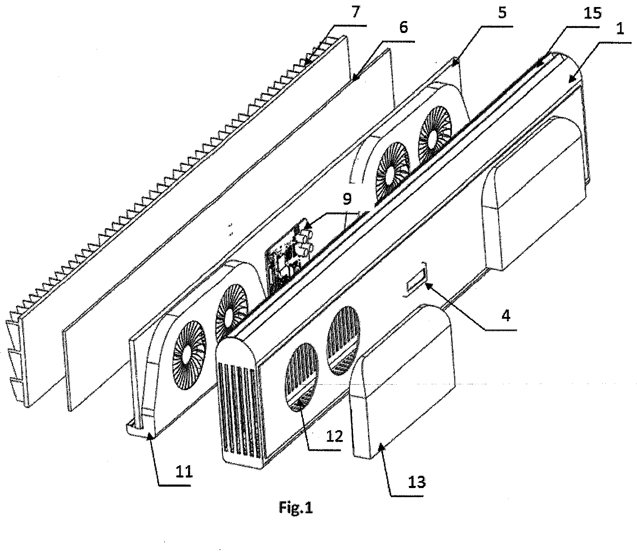

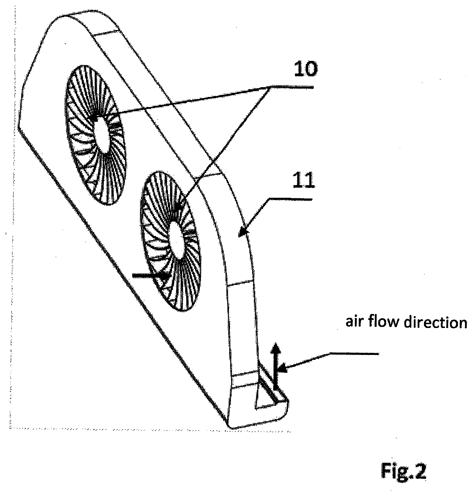

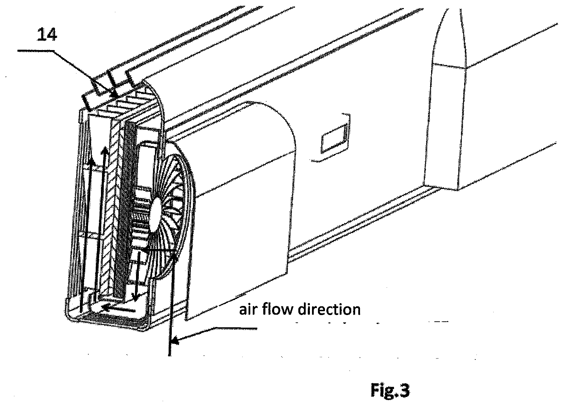

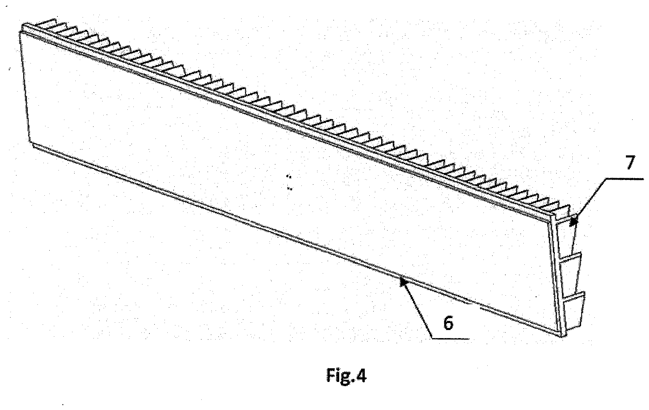

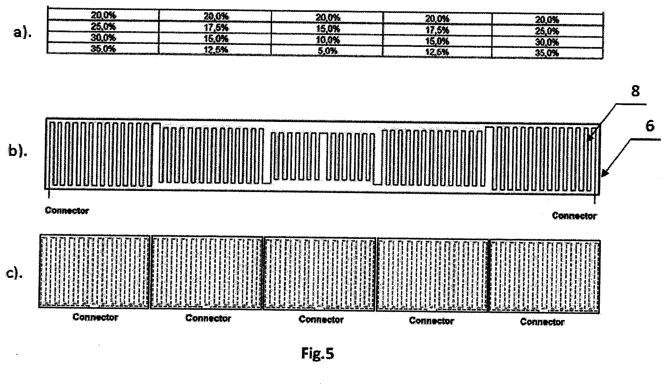

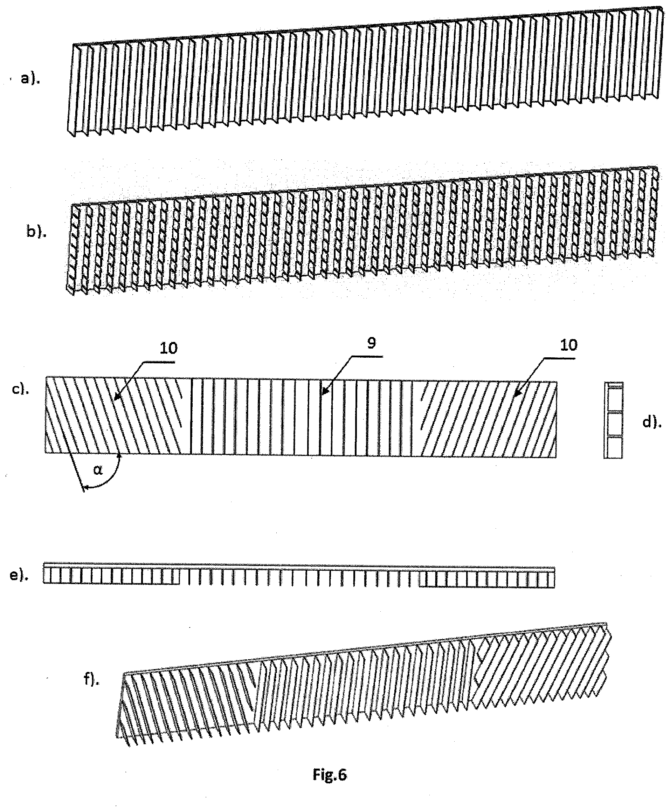

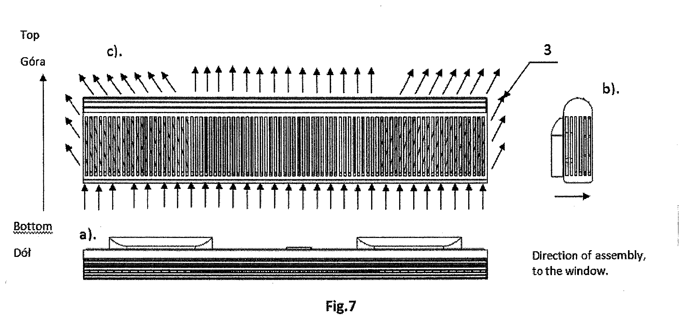

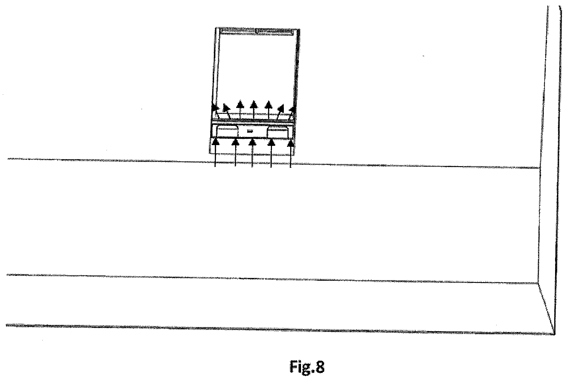

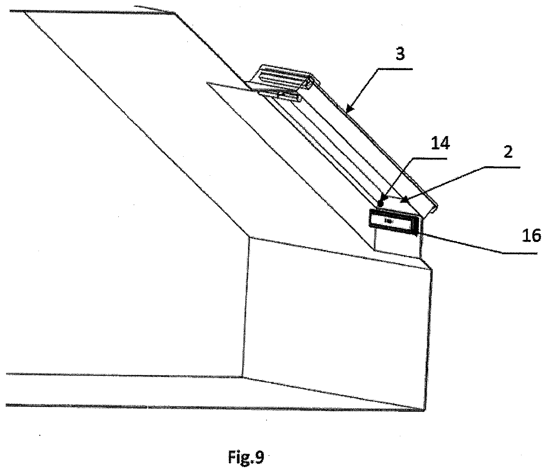

**List of numbers on Fig. 1 -Fig. 9:**

**[0096]**

　　1. Housing

2. Roof window frame
3. roof window
4. Control panel
5. insulation plate
6. Plate heater
7. Radiator
8. resistance wire
9. radiator's vertical ribs
10. radiator's side ribs
11. Fan
12. Suction hole
13. Deflector
14. Top gaps of the housing
15. Top gap shutter

Explanation of numbers on the schematic diagrams of the control system in embodiments of the device according to the invention, presented on Fig. 10, Fig. 11, Fig. 12 and Fig. 13 :

101. Sensor measuring humidity of air inside a room
102. Air humidity level inside a room
103. Sensor measuring temperature of air inside a room
104. Value of air temperature inside a room
105. Function for calculating approximate dew point temperature according to the formula:

$$t_d = \sqrt[8]{\frac{H}{100}} \times [112 + (0,9 \times t)] + (0,1 \times t) - 112$$

where:

$t_d$ - dew point temperature 6 [°C]
t - temperature of air inside a room 4 [°C]
H - relative humidity of air inside a room 2 [ %].

106. Dew point temperature $t_d$
107. Value of temperature reserve $\Delta t$ ( $\geq 1$ °C )
108. The function of arithmetic addition of dew point temperature $t_d$ to temperature reserve $\Delta t$ .
109. The value of demanded temperature being a result of the addition of the value of dew point temperature $t_d$ and the value of temperature reserve $\Delta t$.
110. The function of arithmetic subtraction; calculation of the difference between the value of demanded temperature $t_{min}$ and the value of frame temperature [measured (111) or calculated (121)],
111. Value of the window frame temperature measured in its bottom part on the left or the right side,
112. Error value as the input value for the regulator
113. Regulator - a regulator function of the following standard characteristics: bistable or Proportional P or Proportional - Integral PI or Proportional - Integral - Derivative PID.
114. Value of power to be emitted by the heater [from the dew point module (128)]; sent by means of PWM signal or an analog signal or a digital signal.
115. At least one electrical heater;
116. Roof window frame surface temperature sensor installed in the right bottom or left bottom corner of the window
117. Function for calculating power to be emitted on the heater based on the demanded temperature $t_{min}$ (109), outdoor air temperature (120) and the co-efficient and parameters (118);
118. Parameters entered into the memory of the device:

- window heat transfer co-efficient given by window manufacturer
- window surface
- window height
- co-efficient of the ratio of heater temperature value to frame temperature;
- fan activation

- table with fan revolution values against the value of power to be emitted by the heater;

119. Outdoor air temperature sensor
120. Outdoor air temperature
121. Calculated value of temperature of the window frame surface close to the right bottom or left bottom corner of the window
122. Function calculating window frame temperature based on the measured temperature (123) of the heater (115) and value of power (127) supplied to the heater (115)
123. Heater (115) measured temperature,
124. Switch or value entered into the memory of the device which activates or deactivates the function of maintaining the convection.
125. Value of power to be emitted by the heater [from the convection module (129)]; sent by means of PWM signal or an analog signal or a digital signal.
126. Function comparing the value of power (114) from the dew point module (128) with value of power (125) from the convection module (129) and supplying to the heater (115) the value of power that is the higher of the two.
127. Value of power to be emitted by the heater (115); sent by means of PWM signal or an analog signal or a digital signal.
128. Dew point module - part of the control logic which maintains the temperature of the surface above the dew point.
129. Convection module - part of the control logic which maintains upward air convection with electricity consumption at the lowest possible level
130. Heater temperature sensor; device according to the invention may be equipped with more than one of those sensors, which makes it possible to measure temperature of various areas of the surface located before the device.
131. At least one fan
132. Value of rotational speed to be reached by the fan (131); sent by means of PWM signal or an analog signal or a digital signal.
133. Function controlling the fan (131) based on the value of power (127) to be emitted by the heater (115) and parameters (118) entered into the device.
134. Function responsible for maintaining upward air convection with electricity consumption at the lowest possible level

**Claims**

1. Device for preventing water vapor condensation in rooms on the indoor surface of composite roof windows, comprising a controller, a sensor (103) for measuring indoor temperature (104), and a sensor (116) for measuring temperature (111) of the frame (2) of the window (3) and/or a sensor (119) for measuring outdoor temperature (120) and optionally a sensor (130) for measuring temperature of the heater (115), and a heater (6) and possibly a fan (11) and/or radiator (7) and/or insulation plate (5), wherein said device further has a housing (1) whose size is adjusted to the width of a roof window (3) that can be mounted to the wall of a room or a frame (2) of the roof window (3), preferably at a distance, and a humidity sensor (101) and/or the convection module (129), wherein said convection module is a part of the controller which maintains upward air with electricity consumption at the lowest possible level.

2. The device according to claim 1, **characterized in that** it has a heater (6) with one-sided thermal insulation from the side of the room

3. The device according to claim 1, **characterized in that** it has a heater (6) in form of a resistance wire wound on a carrying element.

4. The device according to claim 1, **characterized in that** it has a heater (6) divided into sections varying in heating power, with extreme sections having power higher than that of the middle section.

5. The device according to claim 1, **characterized in that** it has a plate heater (6) with a sectional structure and comprising separate heating sections of various heating power whose sides are connected to each other.

6. The device according to claim 1, **characterized in that** it has a plate heater (6) with a sectional structure and comprising separate heating sections of equal heating power whose sides are connected to each other, and controlled independently.

7. The device according to claim 1, **characterized in that** it has a radiator (**7**) with ribs (**9**) in form of vertical flat continuous or dotted fins.

8. The device according to claim 1, **characterized in that** the ribs (**10**) of both extreme sets of parallel radiator ribs (**7**) are inclined outwards in opposite directions off the vertical by angle $\alpha$ included in the range of 5-85°.

9. The device according to claim 1, **characterized in that** the plate heater (**6**), insulation plate (**5**) and radiator (**7**) are set slightly apart from at least one wall of the housing (**1**).

10. The device according to claim 1, **characterized in that** it is equipped with at least one fan (**11**) directing the stream of heated air at the window frame (**2**).

11. The device according to claim 1, **characterized in that** it has two ventilation units, each having at least one fan (**11**), built in symmetrically on both sides along the length of the device, on the internal surface of the insulation plate. (**5**).

12. The device according to claim 1, **characterized in that** the ventilation set is equipped with external deflectors (**13**), put on suction holes (**12**), built in on the external surface of the housing (**1**).

13. The device according to claim 1, **characterized in that** the external deflectors (**13**) and housing (**1**) are made from one piece of material.

14. The device according to claim 1, **characterized in that** the housing (**1**) has at least one gap (**14**) from the top along its length equipped with a fixed or adjustable shutter (**15**).

15. The device according to claim 1, **characterized in that** the shutter (**15**) is adjusted manually or mechanically by way of a remote controlled electrical motor.

16. The device according to claim 1, **characterized in that** it has a control system comprising a dew point module (128) and a convection module (129).

17. The device according to claim 1, **characterized in that** the sensor (103) for measuring temperature of indoor air, sensor (116) for measuring temperature of the window (**3**) frame (**2**), sensor (119) for measuring outdoor air temperature and a sensor (101) for measuring humidity are connected to the controller by wire or wirelessly.

18. The device according to claim 1, **characterized in that** it is equipped with a control panel (**4**) placed on the housing (**1**).

19. The device according to claim 1, **characterized in that** it has a receiver of remote signals for entering settings that are sent from a remote control or an electronic telecommunication device.

20. The device according to claim 1, **characterized in that** the length of the device is adjusted to the width of the frame (**2**) of a roof window (**3**).

21. The device according to claim 1, **characterized in that it** has a modular structure with the central module being the controller unit in a separate housing, and side modules being heating modules connected thereto, having the same or different service parameters and/or dimensions, making it possible to adjust power and length of the entire device to the width of a roof window (**3**).

22. The device according to claim 1, **characterized in that** the sensor (116) of frame temperature (**2**) is integrated in one housing with the humidity sensor (101)

23. The device according to claim 1, **characterized in that** the control system is additionally equipped with a sensor (119) for measuring outdoor temperature

24. The device according to claim 1, **characterized in that** the control system has a sensor (101) for measuring humidity inside a room and a sensor (103) for measuring indoor air temperature and dew point module (128) and a turned on convection module (129), with the dew point module (128) being a standard closed-loop control system with feedback, whose pre-set value is the demanded temperature $t_{min}$ being a total of the value of dew point temperature

13

$t_d$ and the reserve $\Delta t$, and the feedback value is the value of the temperature (111) of the window (<u>3</u>) frame (2) from sensor (116) for measuring temperature (111) of the window (<u>3</u>) frame (<u>2</u>), in which PID parameters of the regulator are defined based on parameters (118) entered into the memory of the device and comprising value of the window heat transfer co-efficient, window surface value, window height, whereas the convection module (129) of the control system includes the function (134) for calculating convection based on the temperature (104) of indoor air, temperature (111) of the frame (<u>2</u>) and parameters (118) comprising value of window heat transfer co-efficient, window surface value and window height, which controls the heater (115) so as to maintain constant upward air convection with the lowest possible consumption of electric energy.

25. The device according to claim 1, **characterized in that** the control system has a sensor (101) for measuring humidity inside a room, sensor (103) for measuring indoor air temperature, sensor (119) for measuring outdoor air temperature and dew point module (128) and a convection module (129), with the dew point module (128) being an open-loop control system without feedback, and the pre-set value is the demanded temperature $t_{min}$, being a total of the dew point $t_d$ and value of reserve $\Delta t$, dew point module (128) has a function (117) for calculating the power of the heater (115) necessary to keep the temperature of the surface of the frame (<u>2</u>) above the dew point based on the value of outdoor temperature (120) and parameters (118) entered into memory and comprising the value of window heat transfer co-efficient, value of window surface, window height whereas the convection module (129) of the control system has a function (134) for calculating convection based on indoor air temperature (104), outdoor temperature (120) and parameters (118) comprising value of the window heat transfer co-efficient, window surface value and window height which controls the heater (115) so as to maintain constant upward air convection with the lowest possible consumption of electric energy.

26. The device according to claim 1, **characterized in that** the control system has a sensor (101) for measuring humidity inside a room, sensor (103) for measuring indoor air temperature (104), sensor (119) for measuring temperature (120) of outdoor air, sensor (116) for measuring temperature (111) of roof window (<u>3</u>) frame (<u>2</u>) and a dew point module (128) and a turned on convection module (129), with the dew point module (128) being a closed-loop control system with feedback in which the pre-set value is the demanded temperature $t_{min}$ , being a total of the dew point temperature $t_d$ and value of reserve $\Delta t$, whereas the feedback value is the value of the temperature of the frame (111) from temperature sensor (116) of the frame (<u>2</u>), whereas the values entered into the memory of the dew point module (128) are values of the outdoor air temperature (120) and parameters (118) comprising value of window heat transfer co-efficient, window surface value and window height, defining parameters of PID regulator, whereas the convection module (129) of the system comprises a function (134) for calculating convection based on the measurement of the value of indoor air temperature (104), temperature (111) of the frame surface, outdoor air temperature (120) and parameters (118) entered into the memory comprising value of the window heat transfer co-efficient, value of window surface value and window height, and controlling the heater in such a way as to maintain constant upward air convection with the lowest possible consumption of electric energy.

27. The device according to claim 1, **characterized in that** the control system has a sensor (101) for measuring humidity inside a room, sensor (103) for measuring indoor air temperature, sensor (130) for measuring heater temperature and dew point module (128) and turned on convection module (129), whereas the dew point module (128) is a standard closed-loop control system with feedback, whose pre-set value is the demanded temperature $t_{min}$ , being a total of dew point temperature $t_d$ and value of the reserve $\Delta t$, and the feedback value is temperature (121) of the frame (<u>2</u>) calculated by the function (122) based on the total power (127) supplied to the heater (115), temperature of the heater (123) and parameters (118), whereas values entered into the memory of the dew point module are parameters (118) comprising empirically defined co-efficient of the ratio of heater temperature to window frame temperature, value of the window heat transfer co-efficient, value of window surface and window height which are used for defining PID parameters of the regulator, whereas the convection module (129) controlling the heater (115) so as to maintain constant upward air convection with the lowest possible consumption of energy, has the function of calculating convection (134) based on the calculated value of temperature (121) of the surface of the frame (<u>2</u>) of w roof window (<u>3</u>) value of the indoor temperature (104) and parameters (118) entered into the memory and comprising value of the window heat transfer co-efficient, window surface value, window height and empirically defined co-efficient of the heater temperature to the window frame temperature.

28. The device according to claim 1, **characterized in that** it has at least one heater (<u>6</u>) controlled by means of PWM signal or an analog signal or a digital signal.

**Patentansprüche**

1. Vorrichtung zur Verhinderung von Wasserdampfkondensation in Räumen an der Innenoberfläche von Verbunddachfenstern, bestehend aus einem Steuergerät, einem Sensor (103) zur Messung der Innentemperatur (104) und einem Sensor (116) zur Messung der Temperatur (111) des Rahmens (2) des Fensters (3) und /oder einem Sensor (119) zur Messung der Außentemperatur (120) und wahlweise einem Sensor (130) zur Messung der Temperatur des Heizgerätes (115) sowie ein Heizgerät (6) und gegebenenfalls ein Gebläse (11) und/oder einen Radiator (7) und/oder eine Isolierplatte (5), **dadurch gekennzeichnet, dass** die Vorrichtung ferner ein Gehäuse (1) hat, dessen Größe auf die Breite eines Dachfensters (3) abgestimmt ist, das an der Wand eines Raums oder dem Rahmen (2) und/oder dem Dachfenster montiert werden kann, dies vorzugsweise mit Abstand, sowie ausgestattet mit einem Feuchtigkeitssensor (101) und/oder dem Konvektionsmodul (129), wobei das Konvektionsmodul Teil des Steuergeräts ist, das die aufsteigende Luft mit einem Stromverbrauch auf dem niedrigstmöglichen Niveau hält.

2. Vorrichtung nach Anspruch 1, **dadurch gekennzeichnet, dass** sie eine Heizung (6) mit einseitiger Wärmedämmung von der Seite des Raumes her aufweist.

3. Vorrichtung nach Anspruch 1, **dadurch gekennzeichnet, dass** sie eine Heizung (6) in Form eines auf ein Trägerelement gewickelten Widerstandsdrahtes aufweist.

4. Vorrichtung nach Anspruch 1, **dadurch gekennzeichnet, dass** sie einen Heizer (6) aufweist, der in Abschnitte mit unterschiedlicher Heizleistung unterteilt ist, wobei die äußersten Abschnitte eine höhere Leistung als der mittlere Abschnitt aufweisen.

5. Vorrichtung nach Anspruch 1, **dadurch gekennzeichnet, dass** sie einen Plattenheizer (6) mit sektionalem Aufbau aufweist, der getrennte Heizsektionen mit unterschiedlicher Heizleistung umfasst, und deren Seiten miteinander verbunden sind.

6. Vorrichtung nach Anspruch 1, **dadurch gekennzeichnet, dass** sie einen Plattenheizer (6) mit sektionalem Aufbau aufweist, der getrennte Heizsektionen mit gleicher Heizleistung umfasst, deren Sektoren miteinander verbunden sind und unabhängig voneinander gesteuert werden.

7. Vorrichtung nach Anspruch 1, **dadurch gekennzeichnet, dass** sie einen Radiator (7) mit Rippen (9) in Form von vertikalen flachen durchgehenden oder gepunkteten Flossen aufweist.

8. Vorrichtung nach Anspruch 1, **dadurch gekennzeichnet, dass** die Rippen (10) der beiden äußersten Sätze von parallelen Heizkörperrippen (7) in entgegengesetzten Richtungen von der Vertikalen um einen Winkel $\alpha$ im Bereich von 5 - 85° nach außen geneigt sind.

9. Vorrichtung nach Anspruch 1, **dadurch gekennzeichnet, dass** die Plattenheizung (6), die Isolierplatte (5) und der Radiator (7) leicht von mindestens einer Wand des Gehäuses (1) abgesetzt angebracht sind.

10. Vorrichtung nach Anspruch 1, **dadurch gekennzeichnet, dass** sie mit mindestens einem Gebläse (11) ausgestattet ist, das den erwärmten Luftstrom auf den Fensterrahmen (2) umlenkt.

11. Vorrichtung nach Anspruch 1, **dadurch gekennzeichnet, dass** sie zwei Belüftungseinheiten mit jeweils mindestens einem Ventilator (11) aufweist, die symmetrisch auf beiden Seiten entlang der Länge der Vorrichtung an der Innenfläche der Isolierplatte (5) eingebaut sind.

12. Vorrichtung nach Anspruch 1, **dadurch gekennzeichnet, dass** das Belüftungsset mit externen Deflektoren (13) ausgestattet ist, die auf Ansauglöcher (12) aufgesetzt sind, welche an der Außenfläche des Gehäuses (1) eingelassen sind.

13. Vorrichtung nach Anspruch 1, **dadurch gekennzeichnet, dass** die äußeren Deflektoren (13) und das Gehäuse (1) aus einem Stück Material gefertigt sind.

14. Vorrichtung nach Anspruch 1, **dadurch gekennzeichnet, dass** das Gehäuse (1) mindestens einen Spalt (14) von oben entlang seiner Länge aufweist, der mit einem festen oder verstellbaren Verschluss (15) versehen ist.

15. Vorrichtung nach Anspruch 1, **dadurch gekennzeichnet, dass** der Verschluss (**15**) manuell oder mechanisch über eine elektrische Fernsteuerung eingestellt werden kann.

16. Vorrichtung nach Anspruch 1, **dadurch gekennzeichnet, dass** sie ein Steuerungssystem mit einem Taupunktmodul (128) und einem Konvektionsmodul (129) aufweist.

17. Vorrichtung nach Anspruch 1, **dadurch gekennzeichnet, dass** der Sensor (103) zur Messung der Temperatur der Innenraumluft, der Sensor (116) zur Messung der Temperatur des Rahmens (**2**) des Fensters (**3**), der Sensor (119) zur Messung der Außenlufttemperatur und der Sensor (101) zur Messung der Luftfeuchtigkeit drahtgebunden oder drahtlos mit dem Steuergerät verbunden sind.

18. Vorrichtung nach Anspruch 1, **dadurch gekennzeichnet, dass** sie mit einem Bedienfeld (**4**) ausgestattet ist, das auf dem Gehäuse (**1**) angebracht ist.

19. Vorrichtung nach Anspruch 1, **dadurch gekennzeichnet, dass** sie einen Empfänger für Fernsignale zur Eingabe von Einstellungen aufweist, die von einer Fernbedienung oder einem elektronischen Telekommunikationsgerät gesendet werden.

20. Vorrichtung nach Anspruch 1, **dadurch gekennzeichnet, dass** die Länge der Vorrichtung an die Breite des Rahmens (**2**) eines Dachfensters (**3**) angepasst ist.

21. Vorrichtung nach Anspruch 1, **dadurch gekennzeichnet, dass** sie einen modularen Aufbau hat, wobei das zentrale Modul die Steuereinheit in einem separaten Gehäuse ist und die seitlichen Module damit verbundene Heizmodule sind, die gleiche oder unterschiedliche Betriebsparameter und/oder Abmessungen aufweisen, wodurch es möglich ist, die Leistung und Länge der gesamten Vorrichtung an die Breite eines Dachfensters (3) anzupassen.

22. Vorrichtung nach Anspruch 1, **dadurch gekennzeichnet, dass** der Sensor (116) der Rahmentemperatur (**2**) in einem Gehäuse mit dem Feuchtigkeitssensor (101) integriert ist.

23. Vorrichtung nach Anspruch 1, **dadurch gekennzeichnet, dass** das Steuersystem zusätzlich mit einem Sensor (119) zur Messung der Außentemperatur ausgestattet ist.

24. Vorrichtung nach Anspruch 1 **dadurch gekennzeichnet, dass** das Regelsystem einen Sensor (101) zur Messung der Luftfeuchtigkeit in einem Raum und einen Sensor (103) zur Messung der Raumlufttemperatur sowie ein Taupunktmodul (128) und ein eingeschaltetes Konvektionsmodul (129) aufweist, wobei das Taupunktmodul (128) ein Standardregelsystem mit Feedback ist, dessen voreingestellter Wert die geforderte Temperatur **tmin** ist, die eine Summe des Wertes der Taupunkttemperatur **td** und der Reserve $\Delta$ **t** ist, und der Feedbackwert der Wert der Temperatur (111) des Rahmens (**2**) des Fensters (**3**) vom Sensor (116) zur Messung der Temperatur (111) des Rahmens (**2**) des Fensters (**3**) ist, wobei die PID-Parameter des Reglers auf der Grundlage von Parametern (118) definiert werden, die in den Speicher der Vorrichtung eingegeben werden und den Wert des Wärmedurchgangskoeffizienten des Fensters, den Wert der Fensteroberfläche und die Höhe des Fensters umfassen, während das Konvektionsmodul (129) des Steuerungssystems die Funktion (134) zur Berechnung der Konvektion auf der Grundlage der Temperatur (104) der Innenraumluft umfasst, der Temperatur (111) des Rahmens (**2**) und der Parameter (118), die den Wert des Wärmeübergangskoeffizienten des Fensters, den Wert der Fensteroberfläche und die Fensterhöhe umfassen, enthält, welche die Heizung (115) so steuert, dass eine konstante Luftkonvektion nach oben mit dem geringstmöglichen Verbrauch an elektrischer Energie aufrecht erhalten wird.

25. Vorrichtung nach Anspruch 1, **dadurch gekennzeichnet, dass** das Regelsystem einen Sensor (101) zur Messung der Luftfeuchtigkeit in einem Raum, einen Sensor (103) zur Messung der Raumlufttemperatur, einen Sensor (119) zur Messung der Außenlufttemperatur und ein Taupunktmodul (128) sowie ein Konvektionsmodul (129) aufweist, wobei das Taupunktmodul (128) ein offenes Regelsystem ohne Feedback und der voreingestellte Wert die geforderte Temperatur **tmin** ist, der eine Summe aus dem Taupunkt **td** und dem Wert der Reserve $\Delta$ **t** ist, das Taupunktmodul (128) eine Funktion (117) zur Berechnung der Leistung des Heizgeräts (115) aufweist, die erforderlich ist, um die Temperatur der Oberfläche des Rahmens (2) über dem Taupunkt zu halten, und zwar auf der Grundlage des Wertes der Außentemperatur (120) und der in den Speicher eingegebenen Parameter (118), die den Wert des Wärmeübergangskoeffizienten des Fensters, den Wert der Fensterfläche, und die Höhe des Fensters umfassen, während das Konvektionsmodul (129) des Steuersystems eine Funktion (134) zum Berechnen der Konvektion auf der Grundlage der Innenlufttemperatur (104), der Außentemperatur (120) und der Parameter (118), die den Wert des Fenster Wärmeübertragungskoeffizienten, den Wert der Fensteroberfläche und die Fensterhöhe umfassen, aufweist, die die Heizung (115) so steuert, dass eine konstante Luftkonvektion nach oben mit dem geringstmöglichen Verbrauch an elektrischer Energie aufrechterhalten wird.

26. Vorrichtung nach Anspruch 1, **dadurch gekennzeichnet, dass** das Regelsystem einen Sensor (101) zur Messung der Luftfeuchtigkeit in einem Raum, einen Sensor (103) zur Messung der Raumlufttemperatur (104), einen Sensor (119) zur Messung der Temperatur (120) der Außenluft, einen Sensor (116) zur Messung der Temperatur (111) des Rahmens (2) des Dachfensters (3) und ein Taupunktmodul (128) sowie ein eingeschaltetes Konvektionsmodul (129) aufweist, wobei das Taupunktmodul (128) ein Regelsystem mit Feedback ist, bei dem der voreingestellte Wert die geforderte Temperatur **tmin** ist, die sich aus der Taupunkttemperatur **td** und dem Wert der Reserve $\Delta$ **t** zusammensetzt, während der Feedbackwert der Wert der Temperatur des Rahmens (111) vom Temperatursensor (116) des Rahmens (2) ist, und wobei die in den Speicher des Taupunktmoduls (128) eingegebenen Werte die Werte der Außenlufttemperatur (120) und Parameter (118) sind, die den Wert des Wärmeübergangskoeffizienten des Fensters, den Wert der Fensteroberfläche und die Fensterhöhe umfassen, die Parameter des PID-Reglers definieren, wobei das Konvektionsmodul (129) des Systems eine Funktion (134) zur Berechnung der Konvektion auf der Grundlage der Messung des Wertes der Innenlufttemperatur (104) umfasst, der Temperatur (111) der Rahmenoberfläche, der Außenlufttemperatur (120) und der in den Speicher eingegebenen Parameter (118), die den Wert des Wärmedurchgangskoeffizienten des Fensters, den Wert der Fensteroberfläche und die Fensterhöhe umfassen, zu berechnen und das Heizgerät so zu steuern, dass eine konstante Luftkonvektion nach oben bei geringstmöglichem Verbrauch an elektrischer Energie aufrechterhalten wird.

27. Vorrichtung nach Anspruch 1, **dadurch gekennzeichnet, dass** das Regelsystem einen Fühler (101) zur Messung der Luftfeuchtigkeit im Raum, einen Fühler (103) zur Messung der Raumlufttemperatur, einen Fühler (130) zur Messung der Heizkörpertemperatur sowie ein Taupunktmodul (128) und ein eingeschaltetes Konvektionsmodul (129) aufweist, wobei das Taupunktmodul (128) ein StandardRegelsystem mit Feedback ist, dessen voreingestellter Wert die geforderte Temperatur **tmin** ist, die eine Summe aus der Taupunkttemperatur **td** und dem Wert der Reserve $\Delta$ **t** ist, und der Feedbackwert die Temperatur (121) des Rahmens (2) ist, die von der Funktion (122) auf der Grundlage der dem Heizer (115) zugeführten Gesamtleistung (127), der Temperatur des Heizers (123) und der Parameter (118) berechnet wird, wobei es sich bei den in den Speicher des Taupunktmoduls eingegebenen Werten um Parameter (118) handelt, die einen empirisch definierten Koeffizienten des Verhältnisses zwischen der Temperatur des Heizgeräts und der Temperatur des Fensterrahmens, einen Wert des Wärmedurchgangskoeffizienten des Fensters, einen Wert der Fensterfläche und die Fensterhöhe umfassen, die zur Definition der PID-Parameter des Reglers verwendet werden, während das Konvektionsmodul (129) das Heizgerät (115) so steuert, dass eine konstante Luftkonvektion nach oben mit dem geringstmöglichen Energieverbrauch aufrechterhalten wird, die eine Funktion hat, die Konvektion (134) auf der Grundlage des berechneten Wertes der Temperatur (121) der Oberfläche des Rahmens (2) des Dachfensters (3), des Wertes der Innentemperatur (104) und der in den Speicher eingegebenen Parameter (118) zu berechnen, die den Wert des Wärmeübergangskoeffizienten des Fensters, den Wert der Fensteroberfläche, die Fensterhöhe und den empirisch definierten Koeffizienten der Temperatur der Heizung zur Temperatur des Fensterrahmens umfassen.

28. Vorrichtung nach Anspruch 1, **dadurch gekennzeichnet, dass** sie mindestens eine Heizung (6) aufweist, die mittels eines PWM-Signals oder eines analogen Signals oder eines digitalen Signals gesteuert wird.

## Revendications

1. Dispositif pour empêcher la condensation de la vapeur d'eau dans les pièces sur la surface intérieure des fenêtres de toit composites, comprenant un régulateur, un capteur (103) pour mesurer la température intérieure (104) et un capteur (116) pour mesurer la température (111) du cadre (**2**) de la fenêtre (**3**) et/ou un capteur (119) pour mesurer la température extérieure (120) et facultativement, un capteur (130) pour mesurer la température de l'élément chauffant (115), et un élément chauffant (**6**) et éventuellement un ventilateur (**11**) et/ou un radiateur (**7**) et/ou une plaque d'isolation (**5**), dans lequel ledit dispositif comporte un boîtier (**1**) dont la taille est adaptée à la largeur d'une fenêtre de toit (**3**) qui peut être montée sur le mur d'une pièce ou sur un cadre (**2**) de la fenêtre de toit (**3**), de préférence à distance, et un capteur d'humidité (101) et/ou le module de convection (129), dans lequel ledit module de convection fait partie du régulateur qui maintient l'air ascendant avec une consommation d'électricité la plus faible possible.

2. Le dispositif selon la revendication 1, **caractérisé en ce qu'**il possède un élément chauffant (**3**) avec une isolation thermique unilatérale du côté de la pièce

3. Le dispositif selon la revendication 1, **caractérisé en ce qu'**il possède un élément chauffant (**6**) sous la forme d'un fil de résistance enroulé sur un élément porteur.

4. Le dispositif selon la revendication 1, **caractérisé en ce qu'**il possède un élément chauffant (**6**) divisé en sections dont la puissance de chauffe varie, les sections extrêmes ayant une puissance supérieure à celle de la section centrale.

5. Le dispositif selon la revendication 1, **caractérisé en ce qu'**il possède un élément chauffant (**6**) à structure sectionnelle et comprenant des sections de chauffage séparées de différentes puissances de chauffage dont les côtés sont reliés les uns aux autres.

6. Le dispositif selon la revendication 1, **caractérisé en ce qu'**il possède un élément chauffant (**6**) à structure sectionnelle et comprenant des sections de chauffage séparées d'égale puissance de chauffage dont les côtés sont reliés entre eux et contrôlés indépendamment.

7. Le dispositif selon la revendication 1, **caractérisé en ce qu'**il possède un radiateur (**7**) avec des nervures (**9**) en forme d'ailettes verticales, plates, continues ou pointillées.

8. Le dispositif selon la revendication 1, **caractérisé en ce que** les nervures (**10**) des deux ensembles extrêmes de nervures de radiateur parallèles (**7**) sont inclinées vers l'extérieur dans des directions opposées par rapport à la verticale selon un angle a compris dans la plage de 5-85°.

9. Le dispositif selon la revendication 1, **caractérisé en ce que** la plaque chauffante (**6**), la plaque isolante (**5**) et le radiateur (**7**) sont légèrement écartés d'au moins une paroi du boîtier (**1**).

10. Dispositif selon la revendication 1, **caractérisé en ce qu'**il est équipé d'au moins un ventilateur (**11**) dirigeant le flux d'air chauffé vers le cadre de la fenêtre (**2**).

11. Le dispositif selon la revendication 1, **caractérisé en ce qu'**il possède deux unités de ventilation, chacune ayant au moins un ventilateur (**11**), intégrées symétriquement des deux côtés sur la longueur du dispositif, sur la surface interne de la plaque d'isolation (**5**).

12. Le dispositif selon la revendication 1, **caractérisé en ce que** l'ensemble de ventilation est équipé de déflecteurs externes (**13**), placés sur les trous d'aspiration (**12**), intégrés sur la surface externe du boîtier (**1**).

13. Le dispositif selon la revendication 1, **caractérisé en ce que** les déflecteurs externes (**13**) et le boîtier (**1**) sont fabriqués à partir d'une seule pièce de matériau.

14. Le dispositif selon la revendication 1, **caractérisé en ce que** le boîtier (**1**) possède au moins une fente (**14**) à partir du haut sur toute sa longueur, équipée d'un volet fixe ou réglable (**15**).

15. Le dispositif selon la revendication 1, **caractérisé en ce que** le volet (**15**) est réglé manuellement ou mécaniquement au moyen d'un moteur électrique télécommandé.

16. Le dispositif selon la revendication 1, **caractérisé en ce qu'**il possède un système de contrôle comprenant un module de point de rosée (128) et un module de convection (129).

17. Le dispositif selon la revendication 1, **caractérisé en ce que** le capteur (103) pour mesurer la température de l'air intérieur, le capteur (116) pour mesurer la température du cadre (**4**) de la fenêtre (**3**), le capteur (119) pour mesurer la température de l'air extérieur et un capteur (101) pour mesurer l'humidité sont connectés au contrôleur par fil ou sans fil.

18. Le dispositif selon la revendication 1, **caractérisé en ce qu'**il est équipé d'un panneau de contrôle (**4**) placé sur le boîtier (**1**).

19. Le dispositif selon la revendication 1, **caractérisé en ce qu'**il est doté d'un récepteur de signaux à distance pour l'entrée de paramètres envoyés par une télécommande ou un dispositif de télécommunication électronique.

20. Le dispositif selon la revendication 1, **caractérisé en ce que** la longueur du dispositif est ajustée à la largeur du cadre (**2**) de la fenêtre de toit (**3**).

21. Le dispositif selon la revendication 1, **caractérisé en ce qu'**il possède une structure modulaire avec le module central étant l'unité de contrôle dans un boîtier séparé, et les modules latéraux étant des modules de chauffage reliés à celui-ci, ayant des paramètres de service et/ou des dimensions identiques ou différents, ce qui permet d'ajuster la puissance et la longueur de l'ensemble du dispositif à la largeur de la fenêtre de toit (**3**).

22. Le dispositif selon la revendication 1, **caractérisé en ce que** le capteur (116) de température du cadre (**2**) est intégré dans un seul boîtier avec le capteur d'humidité (101)

23. Le dispositif selon la revendication 1, **caractérisé en ce que** le système de contrôle est également équipé d'un capteur (119) pour mesurer la température extérieure

24. Le dispositif selon la revendication 1, **caractérisé en ce que** le système de contrôle possède un capteur (101) pour mesurer l'humidité à l'intérieur de la pièce et un capteur (103) pour mesurer la température de l'air intérieur et le module de point de rosée (128) et un module de convection activé (129), avec le module de point de rosée (128) étant un système de contrôle standard en boucle fermée avec rétroaction, dont la valeur prédéfinie est la température demandée $t_{min}$ étant un total de la valeur de la température du point de rosée $t_d$ et de la réserve $\Delta t$, et la valeur de rétroaction est la valeur de la température (111) du cadre (**2**) de la fenêtre (**3**) provenant du capteur (116) pour mesurer la température (111) du cadre (**2**) de la fenêtre (**3**), dans lequel les paramètres PID du régulateur sont définis sur la base des paramètres (118) entrés dans la mémoire du dispositif et comprenant la valeur du coefficient de transfert thermique de la fenêtre, la valeur de la surface de la fenêtre, la hauteur de la fenêtre, tandis que le module de convection (129) du système de contrôle comprend la fonction (134) pour calculer la convection sur la base de la température (104) de l'air intérieur, de la température (111) du cadre (**2**) et des paramètres (118) comprenant la valeur du coefficient de transfert thermique de la fenêtre, la valeur de la surface de la fenêtre et la hauteur de la fenêtre qui contrôlent l'élément chauffant (115) de manière à maintenir une convection d'air ascendante constante avec la plus faible consommation possible d'énergie électrique.

25. Le dispositif selon la revendication 1, **caractérisé en ce que** le système de contrôle possède un capteur (101) pour mesurer l'humidité à l'intérieur d'une pièce, un capteur (103) pour mesurer la température de l'air intérieur, un capteur (119) pour mesurer la température de l'air extérieur et un module de point de rosée (128) et un module de convection (129), le module de point de rosée (128) étant un système de contrôle en boucle ouverte sans rétroaction, et la valeur préréglée est la température demandée $t_{min}$, étant un total du point de rosée $t_d$ et de la valeur de la réserve $\Delta t$, le module de point de rosée (128) possède une fonction (117) permettant de calculer la puissance du dispositif de chauffage (115) nécessaire pour maintenir la température de la surface du cadre (**2**) au-dessus du point de rosée, sur la base de la valeur de la température extérieure (120) et des paramètres (118) entrés en mémoire et comprenant la valeur du coefficient de transfert thermique de la fenêtre, la valeur de la surface de la fenêtre, la valeur de la hauteur de la fenêtre, tandis que le module de convection (129) du système de contrôle possède une fonction (134) permettant de calculer la convection en fonction de la température de l'air intérieur (104), de la température extérieure (120) et des paramètres (118) comprenant la valeur du coefficient de transfert thermique de la fenêtre, la valeur de la surface de la fenêtre et la hauteur de la fenêtre qui contrôle l'élément chauffant (115) de manière à maintenir une convection d'air ascendante constante avec la consommation d'énergie électrique la plus faible possible.

26. Le dispositif selon la revendication 1, **caractérisé en ce que** le système de contrôle possède un capteur (101) pour mesurer l'humidité à l'intérieur d'une pièce, un capteur (103) pour mesurer la température de l'air intérieur (104), un capteur (119) pour mesurer la température (120) de l'air extérieur, un capteur (116) pour mesurer la température (111) du cadre (**2**) de la fenêtre de toit (**3**) et un module de point de rosée (128) et un module de convection activé (129), le module de point de rosée (128) étant un système de contrôle en boucle fermée avec rétroaction dans lequel la valeur prédéfinie est la température demandée $t_{min}$ qui est un total de la température du point de rosée $t_d$ et de la valeur de réserve $\Delta t$, tandis que la valeur de rétroaction est la valeur de la température du cadre (111) provenant du capteur de température (116) du cadre (**2**), tandis que les valeurs entrées dans la mémoire du module de point de rosée (128) sont des valeurs de la température de l'air extérieur (120) et des paramètres (118) comprenant la valeur du coefficient de transfert de chaleur de la fenêtre, la valeur de la surface de la fenêtre et la hauteur de la fenêtre, définissant les paramètres du régulateur PID, tandis que le module de convection (129) du système possède une fonction (134) permettant de calculer la convection sur la base de la mesure de la valeur de la température de l'air intérieur (104), la température (111) de la surface du cadre, la température de l'air extérieur (120) et des paramètres (118) entrés dans la mémoire comprenant la valeur du coefficient de transfert de chaleur de la fenêtre, la valeur de la surface de la fenêtre et la hauteur de la fenêtre, et de contrôler le chauffage de manière à maintenir une convection d'air ascendante constante avec la plus faible consommation possible d'énergie électrique.

27. Le dispositif selon la revendication 1, **caractérisé en ce que** le système de contrôle possède un capteur (101) pour mesurer l'humidité à l'intérieur d'une pièce, un capteur (103) pour mesurer la température de l'air intérieur, un capteur (130) pour mesurer la température du chauffage et un module de mesure du point de rosée (128) et un module de conviction activé (129), tandis que le module de mesure du point de rosée (128) est un système de contrôle standard en boucle fermée avec rétroaction, dont la valeur prédéfinie est la température demandée $t_{min}$ étant un total de la température du point de rosée $t_d$ et de la valeur de la réserve $\Delta t$, et que la valeur de rétroaction est la température (121) du cadre (<u>2</u>) calculée par la fonction (122) sur la base de la puissance totale (127) fournie à l'élément chauffant (115), la température de l'élément chauffant (123) et les paramètres (118), tandis que les valeurs entrées dans la mémoire du module de point de rosée sont des paramètres (118) comprenant un coefficient défini empiriquement du rapport entre la température de l'élément chauffant et la température du cadre de la fenêtre, la valeur du coefficient de transfert thermique de la fenêtre, la valeur de la surface et de la hauteur de la fenêtre qui sont utilisés pour définir les paramètres PID du régulateur, tandis que le module de convection (129) contrôle l'élément chauffant (115) de manière à maintenir une convection d'air ascendante constante avec la consommation d'énergie la plus faible possible. Il a pour fonction de calculer la convection (134) sur la base de la valeur calculée de la température (121) de la surface du cadre (<u>2</u>) de la fenêtre de toit (<u>3</u>), de la valeur de la température intérieure (104) et des paramètres (118) entrés dans la mémoire et comprenant la valeur du coefficient de transfert thermique de la fenêtre, la valeur de la surface de la fenêtre, la hauteur de la fenêtre et le coefficient d'efficacité empiriquement défini de la température de l'élément chauffant par rapport à la température du cadre de la fenêtre.

28. Le dispositif selon la revendication 1, **caractérisé en ce qu'**il possède au moins un élément chauffant (<u>6</u>) contrôlé au moyen d'un signal PWM, d'un signal analogique ou d'un signal numérique.

Fig.1

Fig.2

**14**

air flow direction

**Fig.3**

Fig.4

a).

| 20,0% | 20,0% | 20,0% | 20,0% | 20,0% |
|-------|-------|-------|-------|-------|
| 25,0% | 17,5% | 15,0% | 17,5% | 25,0% |
| 30,0% | 15,0% | 10,0% | 15,0% | 30,0% |
| 35,0% | 12,5% | 5,0% | 12,5% | 35,0% |

b).

Connector                                    Connector

c).

Connector      Connector      Connector      Connector      Connector

**Fig.5**

25

a).

b).

c).

10      9      10

α

d).

e).

f).

Fig.6

Top
Góra

c).

3

b).

Bottom
Dół

a).

Direction of assembly,
to the window.

Fig.7

Fig.8

Fig.9

FIG10

FIG11

EP 3 810 883 B1

FIG12

DEW POINT MODULE

CONVECTION MODULE

HUMIDITY SENSOR — 101

102

DEW POINT CALCULATION — 105

AIR TEMP. SENSOR — 103

104

106

$\Delta t$ — 107

108

109

110

112

REGULATOR — 113

114

FRAME TEMP. SENSOR — 116

111

EXTERNAL AIR TEMP. SENSOR — 119

120

PARAMETERS

118

118

118

OR — 126

127

FAN CONTROL FUNCTION — 133

132

FAN — 131

HEATER — 115

128

129

125

ON/OFF — 124

CONVECTION CALCULATION — 134

FIG13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5899078 A
- WO 2005030013 A1
- CA 2942907 A1
- WO 2017162917 A1
- US 2014045419 A1
- US 2011192831 A